Europäisches Patentamt

European Patent Office

Office européen des brevets

(11) Publication number: **0 039 191**
**A2**

(12) **EUROPEAN PATENT APPLICATION**

(21) Application number: **81301724.1**

(22) Date of filing: **16.04.81**

(51) Int. Cl.³: **H 04 L 11/08**
**H 04 L 27/00, H 03 K 13/32**
**H 04 M 11/06**

(30) Priority: **18.04.80 US 141378**

(43) Date of publication of application:
**04.11.81 Bulletin 81/44**

(84) Designated Contracting States:
**BE CH DE FR GB IT LI NL SE**

(71) Applicant: **KEARNEY & TRECKER CORPORATION**
**11000 Theodore Trecker Way**
**West Allis Wisconsin 53214(US)**

(72) Inventor: **Kirkham, Edward E.**
**1795 Steeple Chase Drive**
**Brookfield Wisconsin 53005(US)**

(72) Inventor: **Johnstone, Richard**
**20300 W. Gebhardt Road**
**Brookfield Wisconsin 53005(US)**

(74) Representative: **Baillie, Iain Cameron et al,**
**c/o Ladas & Parry Blumenstrasse 48**
**D-8000 München 2(DE)**

(54) Digital data transmission system with adaptive data transmission rate.

㋕ The data transmission rate of a digital data transmission system is automatically varied to maintain the measured error rate within predetermined limits to achieve the highest transmission rate consistent with predetermined error rate limits. The initial data transmission rate is determined by varying the data transmission rate until the measured error rate reaches the upper limit thereof and then transmitting at slightly reduced data transmission rate.

EP 0 039 191 A2

./...

Fig. 1

- 1 -

## DIGITAL DATA TRANSMISSION SYSTEM WITH ADAPTIVE DATA TRANSMISSION RATE

This invention relates generally to digital data transmission systems and more particularly to digital data transmission systems that utilize ordinary telephone lines as the data transmission link.

On ordinary telephone lines, asynchronous digital data transmission is normally limited to 300 bits per second because this is the maximum data transmission rate that the telephone company can guarantee on the very worst of its telephone circuits. Many telephone connections, however, will allow a transmission rate four to eight times as high, but the telephone company charges very high rates for telephone lines that they select in advance to be that good.

The principal object of this invention is to provide a digital data transmission system which automatically adjusts the data transmission rate to achieve the highest data transmission rate that is compatible with a predetermined maximum error rate so that the maximum speed capabilities of any digital data transmission link can be fully utilized without expensive pre-selection of the transmission circuit.

Accordingly, the present invention provides a data transmission system comprising means for transmitting digital data; means for receiving digital data; a digital transmission link coupled between said transmitting means and receiving means; means for measuring the error rate in the transmission of digital data from said transmitting means to said receiving means; means for comparing the measured error rate to predetermined limits; and means for varying the data transmission rate to achieve the highest transmission rate within predetermined error rate limits.

The present invention also provides a method of transmitting digital data between digital data transmitting means and digital data receiving means comprising the steps of: transmitting test messages between said transmitting and receiving means at varying data transmission rates; measuring the error rates of said test messages; and transmitting data messages between said transmitting and receiving means at a data transmission rate at which the measured error rate falls within predetermined limits.

At the start of a digital data transmission, test messages are sent at various speeds and the error rate thereof is measured to determine the highest transmission rate consistent with predetermined error rate limits. Thereafter, the data transmission rate is automatically decreased when the measured error rate reaches or exceeds a predetermined upper limit and is automatically increased when the measured error rate drops to or below a predetermined lower limit.

In the drawings:

Figure 1 is a block diagram of one preferred embodiment of the invention; and

Fig. 2 is a block diagram of a second preferred embodiment.

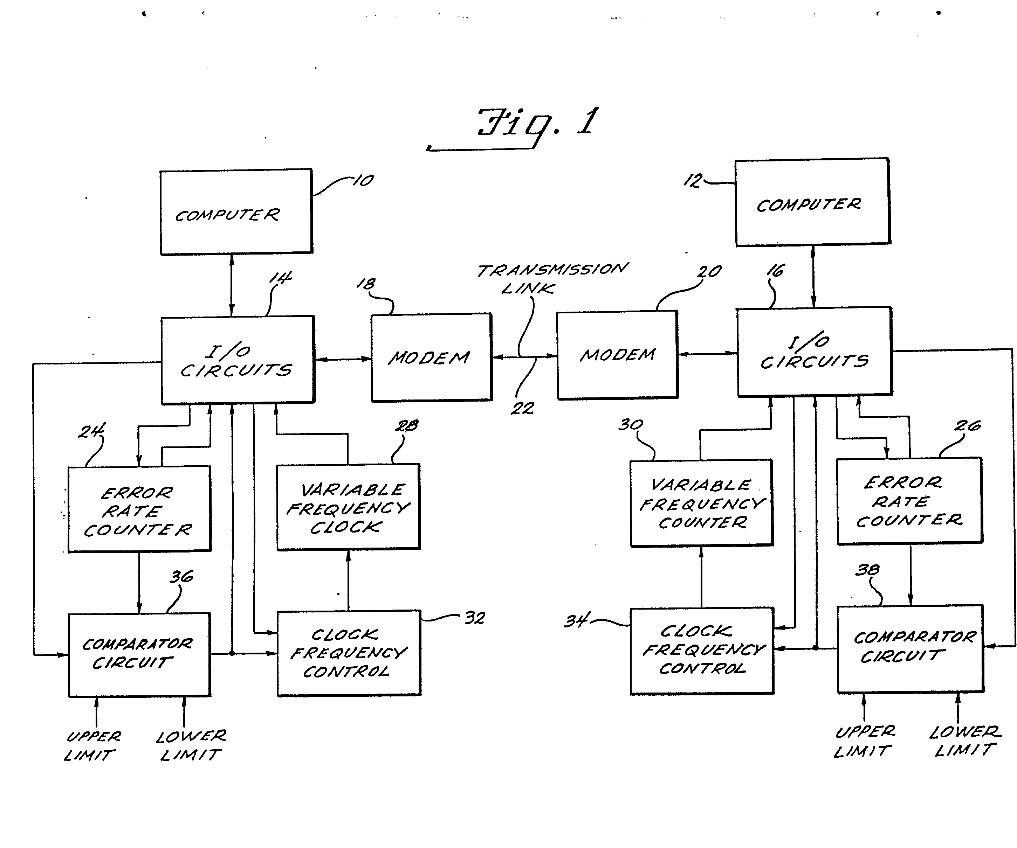

Figure 1 is a block diagram showing one preferred embodiment of the invention which includes two computers 10 and 12 which are located at separate sites and are linked together by a digital data transmission system which includes I/O (input/output) circuits 14 and 16, respectively, modem (modulation-demodulation) circuits 18 and 20, respectively, and a transmission link 22 which may be an ordinary telephone circuit, a radio telephone circuit, or any other suitable data transmission link. Digital data can be transmitted between computers 10 and 12 in the conventional manner over the above-described digital data transmission system which as thus far described is entirely conventional.

Computers 10 and 12 contain conventional error detection circuitry, which will not be described in detail, and conventional circuits for repeating any segment of the data transmission which is found to contain an error. This is also conventional. However, for the purposes of this invention, it is necessary to determine the error rate and this is done by error rate counters 24 and 26 which are responsive to the error detection circuitry of computers 10 and 12, respectively. Error rate counters 24 and 26 both produce an output signal which indicates the error rate per unit of time for their particular data receiver circuit, which is included in modems 18 and 20 and I/O circuits 14 and 16, respectively, which also include data transmitter circuits. The data receiver circuits and data transmitter circuits are not disclosed in detail since they are conventional. Only the clock portions are disclosed. In accordance with this invention, both the data transmitter and receiver circuits are timed by variable frequency clocks 28 and 30, the frequency of which are controlled by clock frequency control circuits 32 and 34, respectively. Variable frequency clocks 28 and 30 enable the data transmission rate to be varied during the data transmission.

Clock frequency control circuits 32 and 34 receive inputs from I/O circuits 14 and 16 and also from comparator circuits 36 and 38 which each receive an input from error rate counters 24 and 26. Each comparator circuit 36 and 38 produces an output indicating when the corresponding error rate is at or above a predetermined upper limit or is at or below a predetermined lower limit. In response to the output signal of comparator circuits 36 and 38, clock frequency control circuits 32 and 34 automatically raise the frequency of clocks 28 and 30 when the error rate is at or below the lower limit, which may be zero, and automatically lower the frequency of clocks 28 and 30 when the error rate is at or above the upper limit.

In the operation of this embodiment, a transmission link is first established by conventional means, e.g. by dialing a telephone. Test messages are then exchanged between computers 10 and 12 at different data transmission rates until the highest transmission rate that is compatible with a predetermined maximum error rate is determined. Data transmission is then commenced at this transmission rate or a slightly lower rate. If the measured error rate rises to or above the predetermined maximum level, as determined by comparators 36 and 38, the transmission rate is automatically lowered by clock frequency controls 32 and 34. If the measured error rate falls to or below the predetermined minimum level, the transmission rate is automatically raised by clock frequency controls 32 and 34. The minimum error rate may be zero, and a time factor may be introduced whereby the error rate must remain at zero for a predetermined time before the data transmission rate is raised.

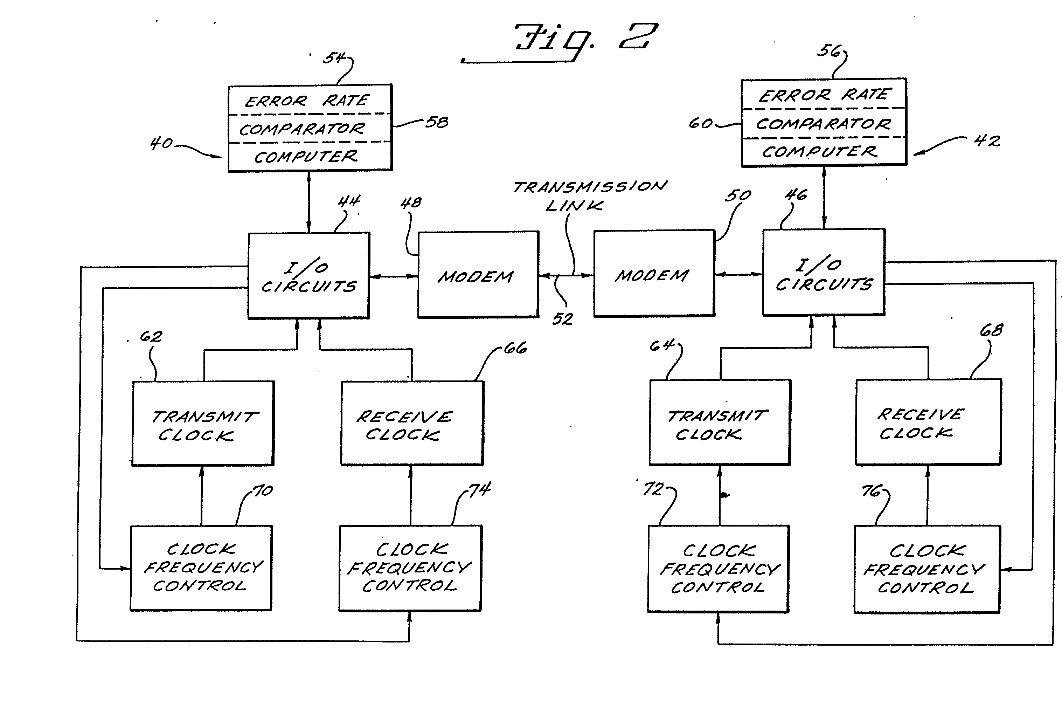

Figure 2 shows a second preferred embodiment of the invention which includes two computers 40 and 42 which are located at separate rate sites and are linked together by a digital data transmission system which includes I/O (input/output) circuits 44 and 46, respectively, modem (modulation-demodulation) circuits 48 and 50, respectively, and a transmission link 52 which may be an ordinary telephone circuit, a radio telephone circuit, or any other suitable data transmission link.

Computers 40 and 42 contain conventional error detection circuitry and have software routines 54 and 56, respectively, for computing the error rate. Computers 40 and 42 also have software routines 58 and 60, respectively, for comparing the error rate to predetermined upper and lower limits and indicating when to raise or lower the data transmission rate. Transmit clocks 62 and 64 are used to clock the data transmission of computers 40 and 42 while separate receive clocks 66 and 68 are used to clock the data reception thereof. The use of separate clocks for transmitting and receiving data enables each computer to transmit and receive at different transmission rates. Each of the clocks is controlled by a corresponding clock frequency control 70, 72, 74 and 76, all of which receive inputs from their respective I/O circuits 44 or 46 to set the clocks to the desired frequency.

With the exception of having separate clocks for receiving and transmitting, the operation of the embodiment shown in Fig. 2 is substantially the same as the operation described above for the embodiment of Fig. 1.

- 6 -

CLAIMS

1. A data transmission system comprising means for transmitting digital data; means for receiving digital data; a digital transmission link coupled between said transmitting means and receiving means; means for measuring the error rate in the transmission of digital data from said transmitting means to said receiving means; means for comparing the measured error rate to predetermined limits; and means for varying the data transmission rate to achieve the highest transmission rate within predetermined error rate limits.

2. A data transmission system according to claim 1 wherein said means for varying the data transmission rate includes a first variable frequency clock for said data transmitting means; means for controlling the frequency of said first variable frequency clock; a second variable frequency clock for said data receiving means; and means for controlling the frequency of said second variable frequency clock.

3. A method of transmitting digital data between digital data transmitting means and digital data receiving means comprising the steps of: transmitting test messages between said transmitting and receiving means at varying data transmission rates; measuring the error rates of said test messages; and transmitting data messages between said transmitting and receiving means at a data transmission rate at which the measured error rate falls within predetermined limits.

4. A method of transmitting digital data between digital data transmitting means and digital data receiving means comprising the steps of: transmitting digital data messages between said transmitting and receiving means at a predetermined data transmission rate; measuring the error rate of said digital data transmission; raising the data transmission rate of said digital data transmission when the measured error rate drops to or below a predetermined lower limit; and lowering the data transmission rate of said digital data transmission when the measured error rate rises to or exceeds a predetermined upper limit.

_Fig. 1_

COMPUTER 10

COMPUTER 12

TRANSMISSION LINK

I/O CIRCUITS 14 18

MODEM

MODEM 20

I/O CIRCUITS 16

22

ERROR RATE COUNTER 24

VARIABLE FREQUENCY CLOCK 28

VARIABLE FREQUENCY COUNTER 30

ERROR RATE COUNTER 26

COMPARATOR CIRCUIT 36

CLOCK FREQUENCY CONTROL 32

CLOCK FREQUENCY CONTROL 34

COMPARATOR CIRCUIT 38

UPPER LIMIT

LOWER LIMIT

UPPER LIMIT

LOWER LIMIT

1/2

0039191

*Fig. 2*